# EUROPÄISCHE PATENTSCHRIFT

(11) **EP 0 670 017 B1**
(45) Veröffentlichungstag und Bekanntmachung des Hinweises auf die Patenterteilung: **11.09.1996**
(21) Anmeldenummer: 94901852.7
(22) Anmeldetag: 23.11.1993
(51) Int. Cl.: F16H 25/06, F16H 49/00

(54) **UMLAUFROLLENGETRIEBE MIT ZWEI EINE VERZAHNUNG AUFWEISENDEN RUNDKÖRPERN UND NACHEINANDER AN DER VERZAHNUNG ANDRÜCKBAREN SEGMENTEN**
EPICYCLIC ROLLER GEAR WITH TWO ROUND BODIES PROVIDED WITH TEETH AND SEGMENTS WHICH MAY BE SUCCESSIVELY PRESSED ON THE TEETH
ENGRENAGE A GALETS PLANETAIRES A DEUX ELEMENTS CIRCULAIRES MUNIS D'UNE DENTURE ET A SEGMENTS S'APPLIQUANT PAR PRESSION SUCCESSIVEMENT SUR CETTE DENTURE

(30) Priorität: 27.11.1992 DE 4239861
(43) Veröffentlichungstag der Anmeldung: 06.09.1995
(73) Patentinhaber: NEUGART GMBH & CO., D-77971 Kippenheim (DE)
(72) Erfinder: IFRIM, Vasile, D-77694 Kehl (DE); IFRIM, Annedore, D-77694 Kehl (DE)
(74) Vertreter: Schmitt, Hans, Dipl.-Ing.
(86) Internationale Anmeldenummer: EP9303283
(87) Internationale Veröffentlichungsnummer: WO9412812

(56) Entgegenhaltungen:
- EP-A- 0 201 730
- DE-A- 2 243 722
- DE-B- 1 182 011
- US-A- 2 966 808

## Beschreibung

Die Erfindung betrifft ein Umlaufrollengetriebe mit zwei eine Verzahnung aufweisenden Rundkörpern und nacheinander an der Verzahnung andrückbaren Segmenten.

Die Erfindung betrifft ein Umlaufrollengetriebe mit zwei an einem Außen- oder Innenumfang eine Profilierung oder Verzahnung aufweisenden Rundkörpern, insbesondere Ringen, wobei ein erster Rundkörper feststeht und ein zweiter Rundkörper parallel und koaxial zu dem ersten Rundkörper angeordnet und relativ zu diesem drehbar gelagert ist und die Zähnezahl an der Profilierung der beiden Rundkörper verschieden ist, mit nacheinander an der Profilierung oder Verzahnung der Rundkörper andrückbaren Segmenten, die eine zu dieser Profilierung oder Verzahnung der Rundkörper passende Gegenverzahnung aufweisen und damit jeweils gleichzeitig die Verzahnung des feststehenden und des drehbaren Rundkörpers beaufschlagen, und mit wenigstens einem an den Segmenten auf deren den Rundkörpern abgewandter Seite umlaufenden, diese jeweils in radialer Richtung parallel zu sich selbst zu den Rundkörpern hin verstellbaren Andrückelement, wobei aufgrund der unterschiedlichen Zähnezahlen an den beiden Rundkörpern der drehbare Rundkörper relativ zu dem feststehenden Rundkörper bewegbar ist und wobei eine Rückstellkraft die Segmente jeweils wieder aus der Verzahnung löst.

Ein derartiges Umlaufrollengetriebe ist z.B. aus der DE-B-1 182 011 bekannt. Dabei sind die einzelnen Segmente jeweils von beiden Stirnseiten her axial geführt um bei ihren Radialbewegungen seitliche Ausweichbewegungen zu verhindern. Darüber hinaus ist in dieser Druckschrift ein Ausführungsbeispiel beschrieben, bei welchem die einzelnen Segmente durch Querstifte untereinander verbunden sind, um eine umlaufende Segmentkette zu bilden und dadurch eine bessere Führung und Halterung der einzelnen Segmente zu erreichen. In beiden Fällen entsteht also ein mechanisch aufwendiges Getriebe, bei welchem zur gegenseitigen Lagerung und Fixierung der einzelnen Segmente ein hoher Herstellungs- und Montageaufwand sowie bei einer beidseitigen Führung der Segmente ein großer Platzbedarf erforderlich ist.

Zwar ist beispielsweise aus der US-A-2 943 513 ein vergleichbares Umlaufrollengetriebe bekannt, bei welchem keine Segmente, sondern ein durchgehend umlaufender Zahnriemen Verwendung findet, jedoch kann dieser nur geringere Drehmomente übertragen und ist aufgrund seiner ständigen Verformung beim Umlauf des oder der Andrückelemente, die ihn einerseits in die Innenverzahnung der Ringe eindrücken und andererseits an den benachbarten Stellen daraus zurückziehen, einem hohen Verschleiß unterworfen.

Bei diesen vorbekannten Getrieben ist jeweils für das oder die Andrückelemente ein ovales Lager erforderlich, damit die Segmente oder der Zahnring jeweils bereichsweise in Innenverzahnungen der Ringe gedrückt werden und die Nachbarbereiche aus diesen herausgehalten oder herausgezogen werden. Eine solche ovale Lagerung erfordert ebenfalls einen hohen Herstellungsaufwand und eine Fertigung mit hoher Präzision.

Der Erfindung liegt deshalb die Aufgabe zugrunde, ein Umlaufrollengetriebe der eingangs erwähnten Art zu schaffen, bei welchem die Zahnsegmente einzeln radial parallel zu sich verstellbar bleiben, ohne daß sie eine beidseitige Führung oder eine gegenseitige Verbindung miteinander benötigen, also unabhängig von einer beidseitigen Führung und/oder einer gegenseitigen Koppelung präzise bewegbar sind, wobei gleichzeitig eine ovale Lagerung oder Ausgestaltung des Andrückelementes vermieden werden soll.

Zur Lösung dieser Aufgabe ist das eingangs definierte Umlaufrollengetriebe dadurch gekennzeichnet, daß die in Umfangsrichtung nebeneinander angeordneten - sich gegebenenfalls berührenden - Segmente einzeln und unabhängig voneinander jeweils an zwei parallelen, starr miteinander verbundenen Stab- oder Blattfedern gegen deren Rückstellkraft auslenkbar gelagert sind, wobei die beiden Federn in radialer Richtung hintereinander angeordnet und beim Andrücken des jeweiligen Segmentes derart auslenkbar sind, daß das jeweilige Segment parallel zu sich selbst verstellbar ist.

Durch diese Anordnung ergibt sich für jedes Segment eine präzise und genaue Fixierung seiner Lage und gleichzeitig wird durch diese Halterung der Segmente auch die Rückstellkraft sichergestellt, so daß die Segmente jeweils unabhängig von Nachbarsegmenten in radialer Richtung ausgelenkt werden können, dabei aufgrund der beiden parallel angeordneten Federn zu sich selbst parallel verstellt werden und nach ihrer Beaufschlagung selbsttätig wieder in ihre Ausgangslage außer Eingriff zurückkehren. Die parallele Verstellung aufgrund der Doppelfederlagerung ergibt den gewünschten Eingriff über die gesamte axiale Zahnlänge in die Gegenverzahnungen und somit eine bestmögliche Kraftübertragung bei geringstmöglichem Verschleiß. Beidseitige Führungen der Segmente oder eine gegenseitige aufwendige Verbindung der Segmente zur Bildung einer Segmentkette werden vermieden, da die Segmente jeweils einzeln aufgehängt sind und dadurch eine genaue festliegende Position haben und beibehalten.

In der Regel hat ein derartiges Umlaufrollengetriebe zwei unterschiedlich innenverzahnte Ringe als Rundkörper, von denen einer drehbar gelagert ist, wobei ferner eine Welle und mit einem mit Andrückelementen oder Rollelementen bestückten und mit der Welle starr verbundener Träger vorgesehen sind. Bei einem solchen Umlaufrollengetriebe kann in Ausgestaltung der Erfindung vorgesehen sein, daß die innenprofilierten Ringe mindestens eine Berührungsstelle mit dem außenverzahnten Profilsegment aufweisen, welches mit z.B. einem, zwei, drei oder mehr Zähnen versehen ist, und daß die Segmente mittels dem parallelen Federsystem an einem Befestigungsring gelagert sind. Vor allem solche Umlaufrollengetriebe mit Ringen als Rundkörper, die an ihrem Innenumfang die Profilierung oder Verzahnung aufweisen, haben sich bewährt. Dabei kann also die Erfindung besonders vorteilhaft angewendet werden, weil einzelne Segmente unabhängig voneinander mit ihren Zähnen in die Innenverzahnungen der Ringe eingedrückt werden können, um dadurch den drehbaren Ring mit der abweichenden Zähnezahl in Drehung zu versetzen und gegenüber der das Andrückelement in Umfangsrichtung bewegenden Antriebswelle eine entsprechend hohe Untersetzung zu bewirken.

Besonders günstig ist es, wenn die in radialer Richtung nebeneinander angeordneten beiden Federn zur Halterung eines Segmentes jeweils mit Abstand zu ihren Einspannstellen durch einen starren Querstab oder den Segmentkörper selbst verbunden sind, wobei sich der Querstab oder die Verbindung insbesondere in radialer Richtung erstrecken, und wenn in axialer Richtung neben dem Querstab oder der Verbindung der beiden Federn das die Verzahnung aufweisende Segment angeordnet oder befestigt ist. Somit bilden die beiden Federn, ihre Einspannstellen und ihre Verbindung ein Viereck mit wenigstens zwei durch die Federn gebildeten parallelen, in der Regel längeren Seiten, wobei aber auch die kürzeren Seiten dieses Viereckes parallel zueinander orientiert sein können. Bei einer Auslenkung des an diesem "Viereck" befestigten Segmentes wird dieses durch diese Lagerung von selbst etwa parallel zu sich selbst gegen eine Rückstellkraft verstellt, also nach der Beaufschlagung durch das Andrückelement wieder zurückverstellt.

Dabei kann das Segment etwa in der Mitte zwischen den beiden Federn oder in Fortsetzung einer dieser etwa parallel zur Mittelachse sich erstreckenden Federn, insbesondere in Fortsetzung der in radialer Richtung am weitesten außen liegenden Feder angeordnet sein. Dies erlaubt eine platzsparende Bauweise, weil die in radialer Richtung bei einem solchen innenverzahnten Ringe aufweisenden Umlaufrollengetriebe weiter innen liegende Blattfeder dann in dem Bereich zu liegen kommen kann, wo das Andrückelement - axial benachbart - umläuft und Platz benötigt. In üblicher Weise sind dabei die Zähne der Drehkörper oder Ringe und die Zähne der Segmente etwa parallel zur Mittelachse der Antriebs- und Abtriebswelle beziehungsweise der Drehkörper oder Ringe angeordnet.

Damit das Andrückelement im einfachen Fall als umlaufendes Gleitelement oder aber als eine sich während des Andrückens und Umlaufens abrollende Rolle ausgebildet sein kann und dabei möglichst stoßfrei und reibungsarm an den jeweils radial verschobenen Segmenten umlaufen kann, obwohl zwischen einem eingedrückten Segment und dem Nachbarsegment eine Abstufung entsteht, kann zwischen dem Andrückelement und den den Drehkörpern oder Ringen abgewandten Seiten der Segmente ein elastischer Kontaktring angeordnet sein. Dieser bildet für das umlaufende Andrückelement eine ununterbrochen durchgehende Fläche, obwohl die Zahnsegmente jeweils relativ zueinander in radialer Richtung verschoben werden und somit immer wieder Abstufungen bilden. Diese werden von dem Kontaktring überbrückt und abgemildert.

Es sei noch erwähnt, daß die Zahl der Zähne an jedem einzelnen Segment umso größer sein kann, je größer die Zähnezahl der Drehkörper oder Ringe ist. Eine entsprechend gute Überdeckung kann erzielt werden.

Eine besonders zweckmäßige Ausgestaltung der Erfindung von eigener schutzwürdiger Bedeutung kann darin bestehen, daß über einen Teil des Umfanges des drehbaren Drehkörpers oder Ringes die Zähnezahl gleich der Zähnezahl über denselben Umfangsbereich des festen Drehkörpers oder Ringes ist und daß die dazu jeweils benachbarten Umfangsbereiche des drehbaren Drehkörpers oder Ringes abweichende Zähnezahlen haben. Dadurch kann erreicht werden, daß beim Umlauf des Andrückelementes für eine gewisse Zeit, während welcher Zahnsegmente in Bereiche gleicher Zähnezahl pro Umfangslänge der beiden Drehkörper oder Ringe eingedrückt werden, die Antriebswelle bei laufendem Antrieb weitergedreht wird, die Abtriebswelle aber stillsteht und erst dann wieder anläuft, wenn die benachbarten Umfangsbereiche mit abweichenden Zähnezahlen oder Zahnteilungen wirksam werden. Dabei kann die Drehrichtung wahlweise in der einen oder anderen Richtung erfolgen, je nachdem, ob die Zähnezahl oder Zahnteilung im benachbarten Umfangsbereich des drehbaren Ringes größer oder kleiner als in dem entsprechenden Umfangsbereich an dem feststehenden Ring ist. Somit kann ein derart gestaltetes Getriebe als Schrittschaltgetriebe oder gegebenenfalls für bestimmte Bereiche als Umkehrgetriebe beziehungweise auch zur Durchführung von Pendelbewegungen eingesetzt werden. Je nach Wahl der Anzahl und Länge dieser Umfangbereiche mit wechselnden Zähnezahlen oder Zahnteilungen können dabei Pendelbewegungen mit kleinerer oder größerer Amplitude vorgegeben werden. Dabei kann diese Anordnung auch bei Umlaufrollengetrieben mit untereinander verbundenen Segmenten, Zahnriemen oder dergleichen zur Anwendung kommen. Besonders günstig ist es jedoch, wenn die Segmente einzeln an parallelen Federn aufgehängt sind, um eine präzise und verschleißarme Bewegung in platzsparender Bauausführung zu ermöglichen, was insbesondere dann günstig ist, wenn innerhalb des Getriebes aufgrund der erwähnten Maßnahme mit wechselnden Zähnezahlen oder Zahnteilungen während des Umlaufes Beschleunigungen und Verzögerungen am Abtrieb auftreten.

Eine weitere Ausgestaltung kann darin bestehen, daß der bewegliche Drehkörper oder Ring in bestimmten Winkelbereichen seines Umfanges mehr und in anderen Winkelbereichen weniger Zähne als der gegenüberliegende Umfangsbereich des festen Drehkörpers oder Ringes aufweist. Dies führt zu der schon erwähnten Umkehrbewegung der Drehrichtung am Abtrieb, während der Antrieb in gleichbleibender Richtung umläuft.

Im Übergangsbereich von Umfangsbereichen übereinstimmender Zähnezahlen zu solchen unterschiedlicher Zähnezahlen oder im Übergangsbereich von Umfangsbereichen mit verschiedenen Zähnezahlen kann eine Übertragungsfunktion der Übergänge der Verzahnungen vorgesehen sein oder zur Anwendung kommen, die mindestens in der ersten Ableitung den Wert unterschiedlich von Null beziehungsweise Stoßfreiheit aufweist. Dadurch kann der Übergang von Stillstand zur Drehbewegung oder von einer Drehrichtung in die andere Drehrichtung des Abtriebes ruckfrei gemacht werden.

Als Andrückelement kann wenigstens eine umlaufende Rolle (bereits erwähnt) oder wenigstens eine Düse für ein Druckmedium, insbesondere eine Druckluft abgebende Düse, vorgesehen sein, die an den Segmenten umläuft und diese nacheinander aufgrund des von ihr ausgehenden Strahles entgegen deren federnder Aufhängung in Eingriffstellung bringt. Dies führt zu einer im wesentlichen reibungsfreien Betätigung der einzelnen Segmente.

Eine ebenfalls reibungsfreie Betätigung des Umlaufrollengetriebes kann erreicht werden, wenn eine elektromagnetische Andrückvorrichtung vorgesehen ist, bei welcher die Segmente Magnete sind, die von einem an ihrer dem Drehkörper abgewandten Seite umlaufenden Magneten als Andrückelement mit gegeneinander gleichpoliger Anordnung gegen ihre federnde Lagerung abstoßbar und auslenkbar sind. Auch dies ergibt eine reibungsfreie Betätigung.

Eine konstruktiv günstige Anordnung, die auch für die Montage zweckmäßig ist, kann darin bestehen, daß die jeweils parallelen Federn oder Blattfedern innerhalb ihres Einspannbereiches miteinander insbesondere einstückig durch einen Ring verbunden sind. Beispielsweise könnte ein ursprünglich breiter doppelwandiger Ring durch Axialschlitze in einzelne parallele Blattfedern aufgeteilt werden, wobei die Schlitze den Ring jedoch nicht völlig zertrennen. Somit ergibt sich ein einziges Bauteil, bei welchem aber trotzdem die einzelnen Segmente unabhängig voneinander in radialer Richtung gegen die sie tragenden Doppelfedern auslenkbar sind. Entsprechend einfach ist die Montage dieser relativ vielen Segmente.

Es sei noch erwähnt, daß die Andrückrollen eine Verzahnung haben können, die mit einer dazu passenden Verzahnung an den Segmenten während des Umlaufes und des Andrückens der Segmente kämmt. Die Segmente sind in diesem Falle dann also auf ihren beiden Umfangsseiten mit Verzahnungen versehen. Dadurch ergibt sich beim Umlauf der Andrückrolle oder Andrückrollen trotz der zwischen eingedrückten und nicht eingedrückten Segmente jeweils gebildeten Stufe ein weicherer Übergang und weicherer Umlauf.

Falls es erforderlich oder wünschenswert ist, die Federung der einzelnen Segmente weicher zu gestalten, ohne eine größere oder wesentlich größere axiale Baulänge zu benötigen, können die beiden stabförmigen Federn jeweils über wenigstens zwei Richtungsänderungen etwa S- oder Z-förmig gestaltet sein, wobei sie insbesondere mit ihren Richtungsänderungen spiegelsymmetrisch zueinander angeordnet sein können und die mit dem Segment und miteinander verbundenen Enden näher zueinander als die Einspannenden liegen können. Bei etwa gleichbleibender axialer Länge der Federn kann dadurch die wirksame Federlänge vergößert werden, also eine weichere Federung erzielt werden.

Für einen guten Rundlauf und Masseausgleich ist es zweckmäßig, wenn in an sich bekannter Weise wenigstens zwei einander auf einem Durchmesser gegenüberliegende oder drei gleichmäßig am Umfang verteilte Andrückelemente vorgesehen sind, die an insbesondere gemeinsamen, mit der Antriebswelle drehbaren Stegen oder dergleichen Trägern befestigt oder gelagert sind und mit diesen und der Antriebswelle umlaufen.

Ein abgewandeltes Umlaufrollengetriebe könnte dadurch gebildet sein, daß die Drehkörper oder Ringe oder Scheiben eine Außenverzahnung haben, daß die einzelnen Segmente von außen dagegen andrückbar sind und eine Innenverzahnung haben und daß an der Außenseite der Segmente das Andrückelement oder die Andrückrolle umläuft. Somit könnten die Drehkörper mit Außenverzahnungen hergestellt werden, was einfacher als die Fertigung von Innenverzahnungen ist.

Nachstehend sind Ausführungsbeispiele der Erfindung anhand der Zeichnung näher beschrieben.

Es zeigt in zum Teil schematisierter Darstellung:
- Fig.1: einen Querschnitt eines erfindungsgemäßen Umlaufrollengetriebes gemäß der Schnittlinie I-I in Fig.2 mit Ansicht auf drei als Rollen ausgebildete Andrückkörper und die von diesen beaufschlagten einzelnen Zahnsegmente, die jeweils einen Zahn aufweisen,
- Fig.2: eine zur Hälfte im Längsschnitt gehaltene Seitenansicht des erfindungsgemäßen Umlaufrollengetriebes gemäß Fig.1,
- Fig.3: eine der Fig.1 entsprechende Darstellung eines Umlaufrollengetriebes im Querschnitt gemäß der Linie I-I in Fig.2, wobei die einzelnen Segmente jeweils zwei Zähne aufweisen,
- Fig.4: eine der Fig.3 entsprechende Darstellung, wobei die einzelnen Segmente jeweils drei Zähne aufweisen,
- Fig.5: eine den Figuren 1, 3 und 4 analoge Darstellung eines Umlaufrollengetriebes gemäß der Schnittlinie V-V in Fig.6, wobei zwischen den umlaufenden Rollen und den einzelnen Zahnsegmenten ein elastischer Kontaktring angeordnet ist, so daß die Andrückbewegungen von den Andrückrollen mittelbar auf die Zahnsegmente übertragen werden,
- Fig.6: eine zur Hälfte im Längsschnitt gehaltene Seitenansicht des erfindungsgemäßen Umlaufrollengetriebes gemäß Fig.5,
- Fig.7a: eine Stirnansicht eines einzelnen Zahnsegmentes mit zwei Zähnen,
- Fig.7b: eine Seitenansicht des Zahnsegmentes mit den es tragenden parallelen Federn,
- Fig.7c: eine Rückansicht auf die Einspannenden der Federn und die diesen Federn zugewandte, die Federn starr verbindende Seite des Zahnsegmentes,
- Fig.7d: eine Draufsicht in radialer Richtung auf ein Zahnsegment und dessen Federsystem,
- Fig.8: in schematisierter Darstellung einen innenverzahnten Ring eines erfindungsgemäßen Umlaufrollengetriebes mit drei Bereichen, in denen eine übereinstimmende Zähnezahn zu entsprechenden Winkelbereichen des anderen Ringes und in den übrigen drei Bereichen eine abweichende Zähnezahl vorgesehen ist,
- Fig.9: einen innenverzahnten Ring mit drei Bereichen, in denen verschiedene Zähnezahlen gegenüber den analogen Winkelbereichen des feststehenden Ringes ausgebildet sind,
- Fig.10: eine Darstellung analog den Figuren 1 und 3 bis 5 gemäß der Querschnittlinie X-X in Fig.11, wobei die als Andrückelemente dienenden Umlaufrollen eine Außenverzahnung und die mit ihren außenliegenden Zähnen in die Innenverzahnungen der Ringe eingreifenden Segmente zusätzlich eine Innenverzahnung haben, mit der die Verzahnung an dem Außenumfang der Andrückrollen kämmt,
- Fig.11: eine zur Hälfte im Längsschnitt gehaltene Seitenansicht des Umlaufrollengetriebes gemäß Fig.10,
- Fig.12: einen Längsschnitt eines erfindungsgemäßen Umlaufrollengetriebes mit Antrieb und Abtrieb,
- Fig.13: einen Querschnitt und
- Fig.14: einen Längsschnitt eines abgewandelten erfindungsgemäßen Umlaufrollengetriebes, bei welchem die Andrückkörper an der Außenseite von mit Verzahnungen versehenen Ringen oder Scheiben umlaufen und dort befindliche Segmente radial nach innen andrücken.

Bei den nachfolgend beschriebenen Ausführungsbeispielen werden bezüglich ihrer Funktion übereinstimmende Teile auch bei unterschiedlicher Gestaltung mit im wesentlichen übereinstimmenden Bezugszahlen versehen.

Ein im ganzen mit 10 bezeichnetes Umlaufrollengetriebe, im folgenden auch kurz "Getriebe 10" genannt, hat zwei an ihrem Innenumfang eine Profilierung oder Verzahnung aufweisende Ringe 1 und 4, wobei der erste Ring 1 feststeht und der zweite Ring 4 parallel und koaxial zu dem ersten Ring angeordnet und relativ zu diesem drehbar gelagert ist. Die Zähnezahl an der Profilierung oder Verzahnung dieser beiden Ringe 1 und 4 ist verschieden.

Zum Getriebe 10 gehört es ferner, daß an der Profilierung oder Verzahnung der Ringe 1 und 4 Segmente 6.1 bis 6.3 bzw. 6.D andrückbar sind, die eine zur Verzahnung der Ringe 1 und 4 passende Gegenverzahnung aufweisen und damit jeweils gleichzeitig in die Verzahnung des feststehenden Ringes 1 und des drehbaren Ringes 4 eindrückbar sind, so daß sich durch die unterschiedliche Zähnezahl der beiden Ringe 1 und 4 eine Verdrehung des drehbaren Ringes 4 mit hoher Untersetzung gegenüber einer Antriebswelle 2 ergibt.

An den Segmenten 6.1, 6.2, 6.3 und 6.D läuft wenigstens ein der Verzahnung der Ringe 1 und 4 abgewandtes Andrückelement, im Ausführungsbeispiel eine Rolle 3 um, durch welche die einzelnen Segmente jeweils in radialer Richtung parallel zu sich selbst so verstellt werden, daß sie in Eingriff mit der Verzahnung der Ringe 1 und 4 gelangen. Der Umlauf der Rolle 3 wird durch die Antriebswelle 2 bewirkt. Eine noch zu erläuternde Rückstellkraft sorgt dafür, daß die Segmente 6 wieder jeweils aus der Verzahnung gelöst werden. Es sei erwähnt, daß im Ausführungsbeispiel jeweils drei als Andrückelemente dienende Rollen 3 in gleichmäßigem Abstand zueinander an der Innenseite der Segmente 6 umlaufen, so daß jeweils in drei Zonen Formschluß innerhalb des Getriebes 10 besteht.

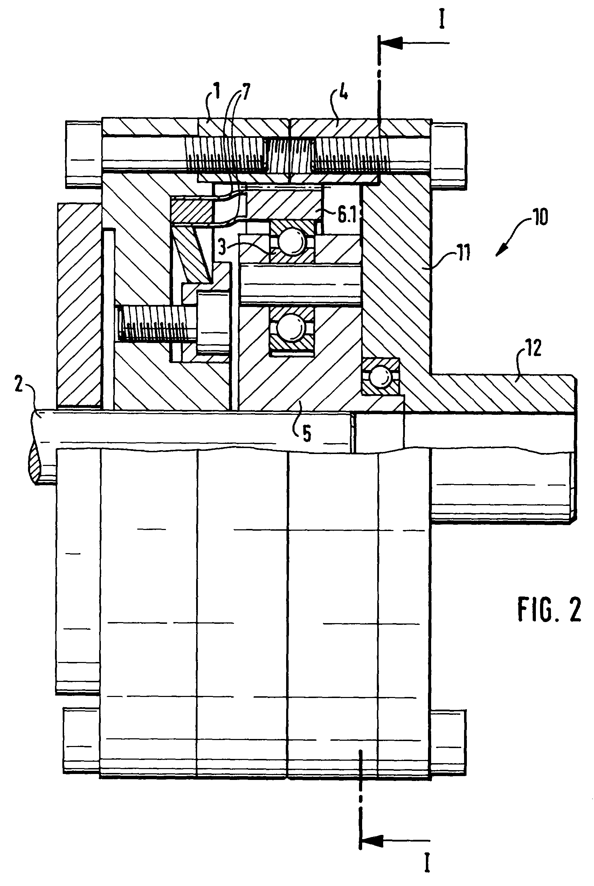

Gemäß den Figuren 2, 6, 7 und 11 sind die in Umfangsrichtung nebeneinander angeordneten Segmente 6.1, 6.2, 6.3 und 6.D einzeln, also unabhängig voneinander jeweils in radialer Richtung in die Innenverzahnungen der Ringe 1 und 4 hinein und wieder daraus zurück bewegbar und zu diesem Zweck jeweils an zwei parallelen, starr miteinander verbundenen Stab- oder Blattfedern 7 gegen deren Rückstellkraft auslenkbar gelagert. In den genannten Figuren erkennt man gut, daß dabei die Federn 7 in radialer Richtung hinter- bzw. nebeneinander angeordnet und beim Andrücken des jeweiligen Segmentes 6 derart auslenkbar sind, daß das jeweilige Segment in der angestrebten Weise parallel zu sich selbst verstellbar ist. Dies wird durch das von den Federn 7, deren Einspannstelle und deren starre Verbindung gebildete Viereck bewirkt, dessen beide langen Seiten von den Federn 7 gebildet sind. Durch diese einfache und zweckmäßige Maßnahme werden also aufwendige Führungen oder Verbindungen der einzelnen Segmente untereinander vermieden.

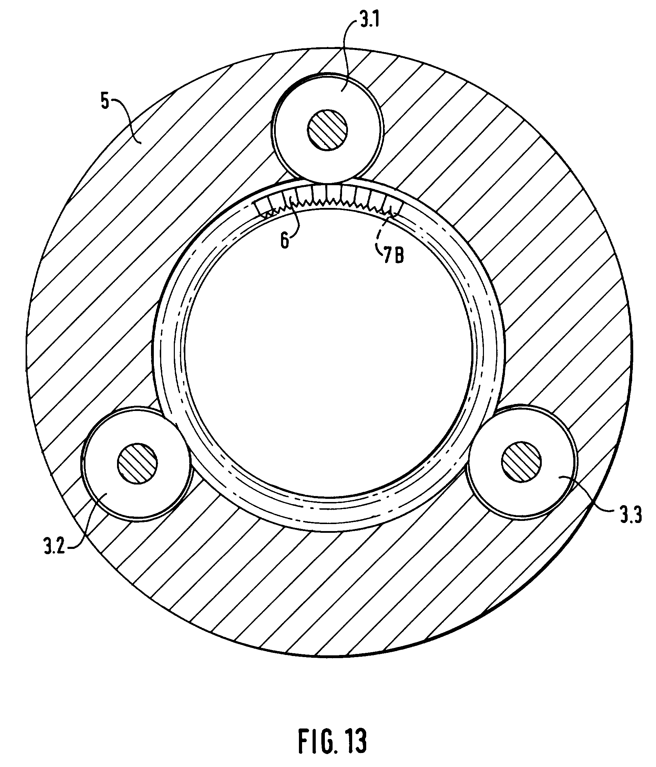

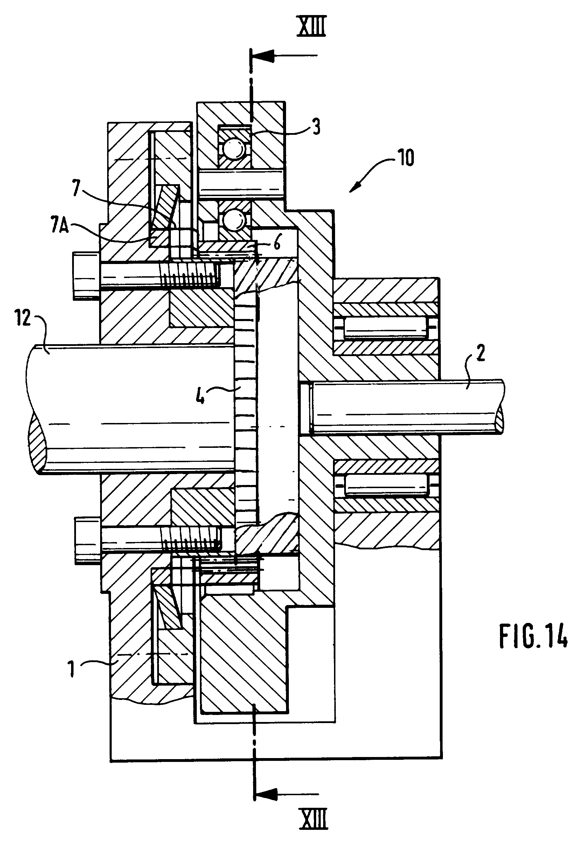

In allen Ausführungsbeispielen sind zwei parallele, mit Innenverzahnung versehene Ringe 1 und 4 vorgesehen. Denkbar wäre jedoch auch, andere Rundkörper zu verwenden, beispielsweise mit Außenverzahnungen versehene Scheiben, Räder oder Ringe gemäß Fig.13 und Fig.14, bei denen die Segmente in analoger Weise von außen angedrückt werden. Dies ist dadurch möglich, daß die Segmente 6 durch die Federn 7 sicher gehalten werden, also auch an der Außenseite entsprechender Rundkörper gelagert werden können, ohne aufwendige Haltemaßnahmen zu benötigen und ohne die Angriffsseite für die dann außen umlaufenden Rollen 3 oder ähnliche Andrückelemente versperren zu müssen.

Die als Andrückelemente dienenden Rollen 3 sind über einen Rollenträger 5, im folgenden auch kurz "Träger 5" genannt mit der Welle 2 in der Weise starr verbunden, daß die Drehung dieser Welle 2 mit Hilfe eines Antriebes den oder die Träger 5 in Drehrichtung bewegt, so daß die Rollen 3 sich an der Innenseite der Segmente 6 abrollen und diese dadurch nacheinander in der schon angedeuteten Weise parallel zu sich selbst verstellen, wobei die verstellten Segmente 6 jeweils nach dem Vorbeilaufen der Rolle 3 aufgrund der Rückstellkraft der Federn 7 wieder außer Eingriff kommen.

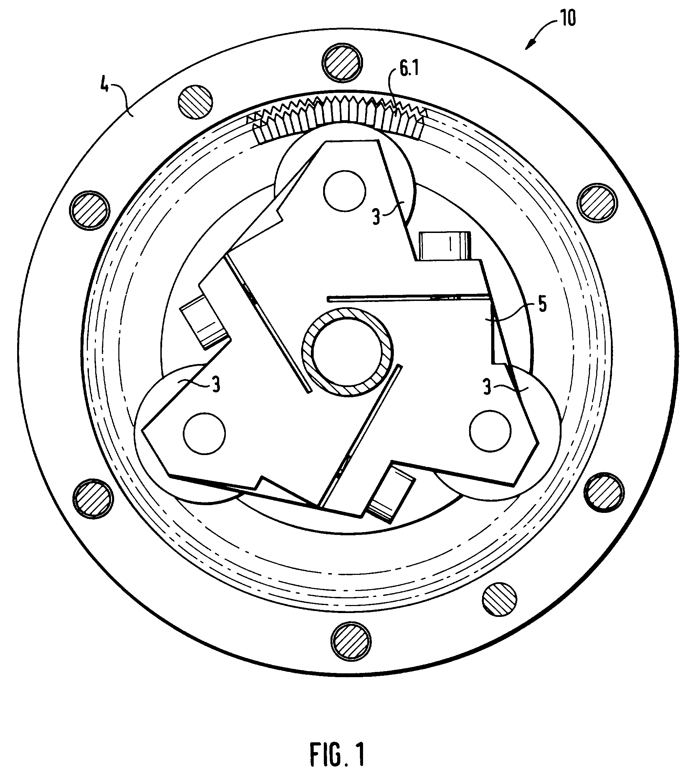

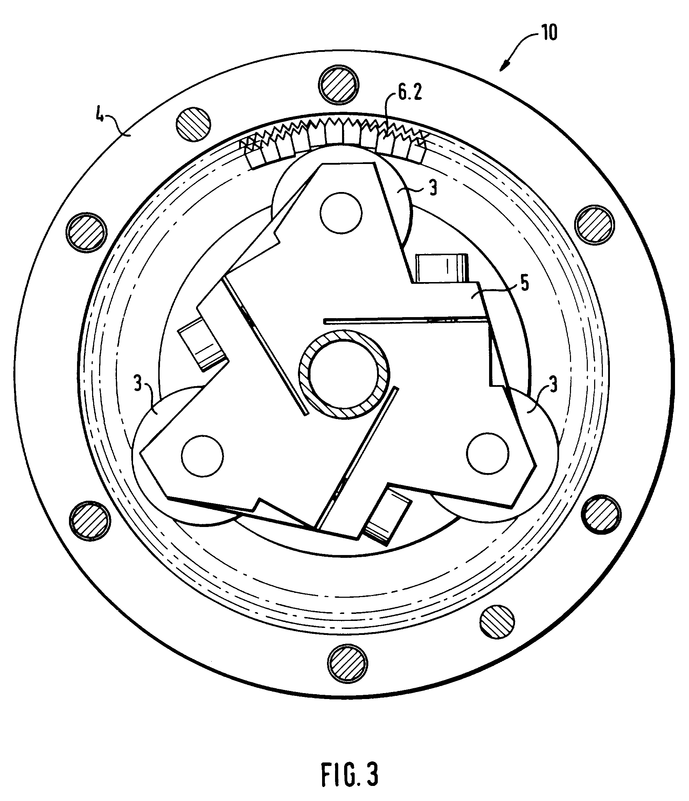

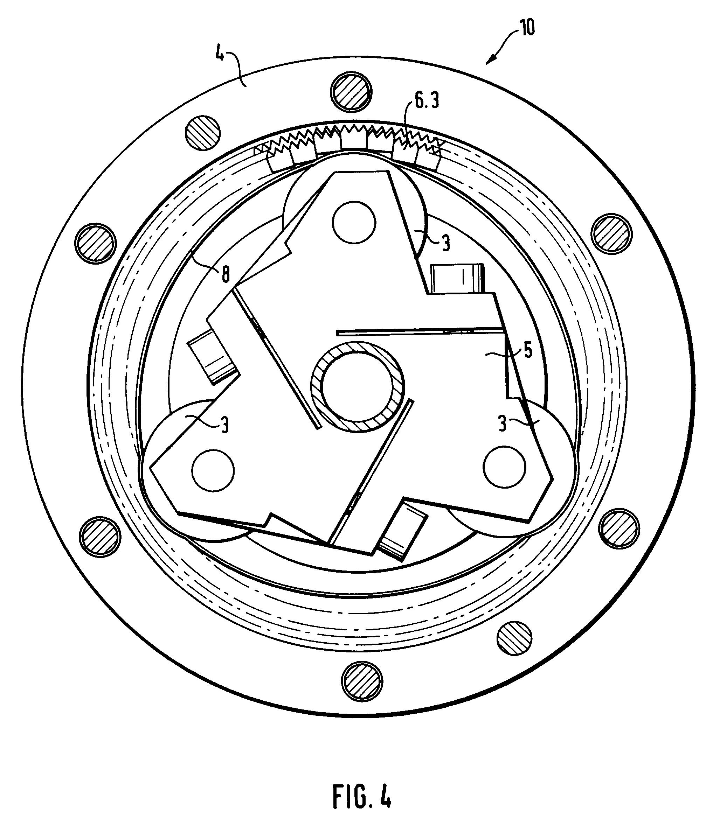

Die innen profilierten Ringe 1 und 4 weisen dabei jeweils mindestens eine Berührstelle mit dem außen verzahnten Profilsegment auf, welches gemäß den verschiedenen Figuren mit einem (Fig.1), zwei (Fig.3), drei (Fig.4) oder mehr Zähnen versehen sein kann. Die Segmente 6 sind dabei mittels dem parallelen Federsystem an einem Befestigungsring, im Ausführungsbeispiel dem festehenden Ring 1, gelagert.

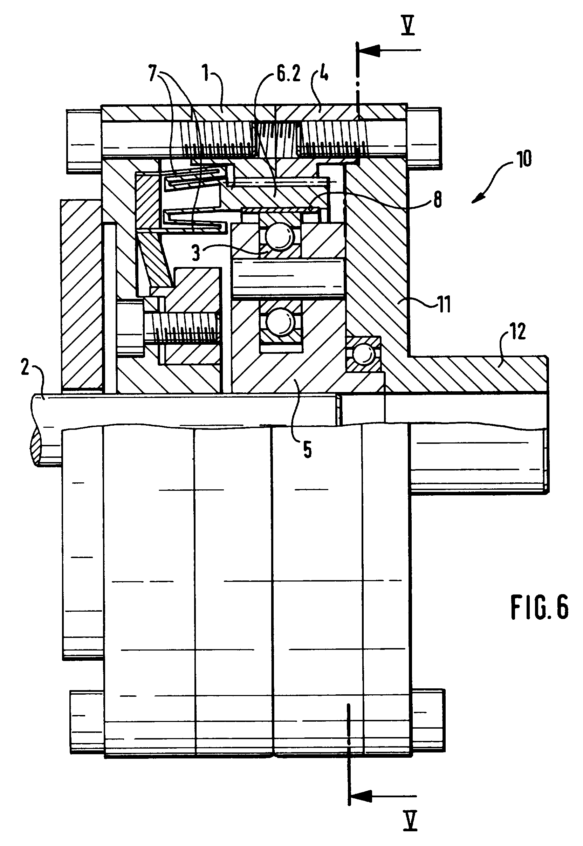

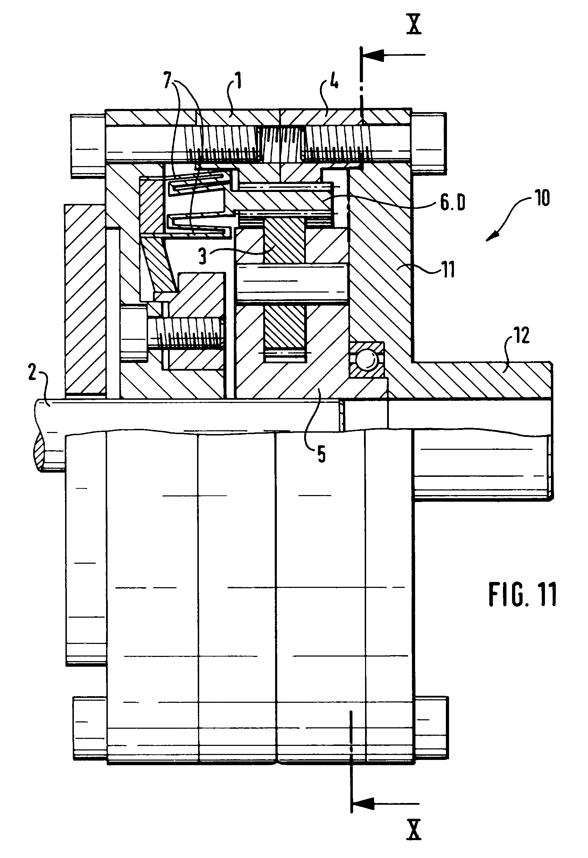

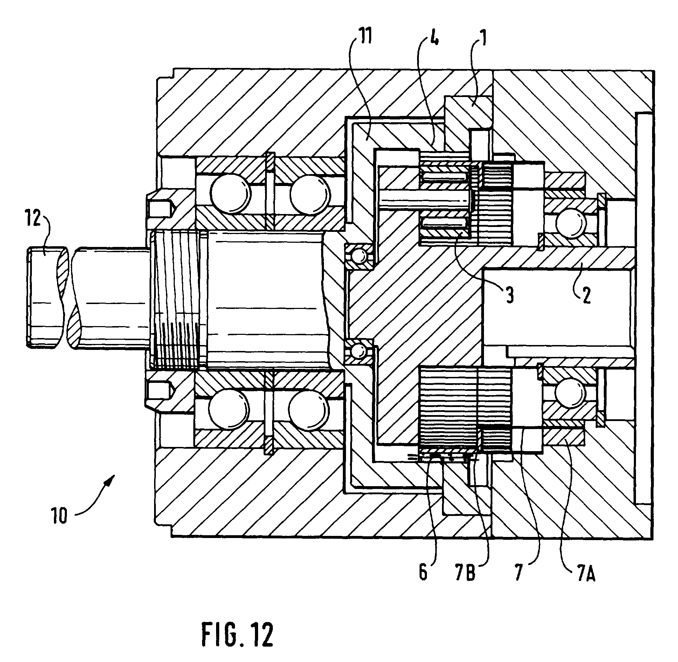

Besonders deutlich erkennt man die Lagerung der beiden Federn 7 auch in Fig.12. Dabei wird deutlich, daß die in radialer Richtung nebeneinander angeordneten beiden Federn 7 zur Halterung eines Segmentes 6 jeweils mit Abstand zu ihrer Einspannstelle 7A durch einen Querstab 7B oder den Segmentkörper 6 selbst verbunden sind. Der Querstab 7B oder die Verbindung durch das Segment 6 erstreckt sich dabei in radialer Richtung und das die Verzahnung aufweisende Segment 6 ist in axialer Richtung neben dem Querstab 7B oder der Verbindung der beiden Federn 7 angeordnet und befestigt. Das Segment 6 befindet sich also außerhalb des von der Einspannstelle 7A, den beiden Federn 7 und deren Verbindung gebildeten Viereckes, so daß eine Auslenkung des Segmentes 6 parallel zu sich selbst gegen die dabei verformten Blattfedern 7 und deren Rückstellkraft erfolgt. Dabei genügen geringe Auslenkwege, um die Segmente 6 jeweils in Eingriff mit den Innenprofilierungen 1 und 4 zu bringen. Die Verformung der Federn 7 beziehungsweise des Blattfedersystems ist in Fig.2, Fig.6 un Fig.11 etwas übertrieben dargestellt.

Gemäß den Figuren 2, 6, 7b und 11 kann sich das Segment 6 jeweils etwa in der Mitte zwischen den beiden Federn 7, gemäß Fig.12 in Fortsetzung einer dieser etwa parallel zur Mittelachse sich erstreckenden Federn 7, bevorzugt parallel zu der in radialer Richtung am weitesten außenliegenden Feder 7 angeordnet sein. Diese letztere Anordnung hat gemäß Fig.12 den Vorteil, daß die radial weiter innenliegende Feder 7 auf der Höhe der Drehachse für die Andrückrolle 3 zu liegen kommen kann, also das gesamte Getriebe 10 eine geringstmögliche radiale Abmessung erhält. Sowohl die Zähne der Drehkörper oder Ringe 1 und 4 als auch die Zähne der Segmente 6 sind dabei etwa parallel zur Mittelachse der Antriebswelle 2 und der Abtriebswelle 12 (vgl.Fig.12) angeordnet, welche mit dem drehbaren Ring 4 fest - zum Beispiel über eine Glocke oder Scheibe 11 - verbunden ist.

Bei dem Umlaufrollengetriebe 10 sind also statt Planetenrädern Zahnsegmente 6 vorgesehen. Der Rollenträger 5, welcher Andrückrollen 3.1 bis 3.3 aufnimmt, ist mit der Welle 2 fest verbunden, dreht sich also mit dieser Welle 2 mit. Indem die Welle 2 angetrieben wird, führen die Rollen 3.1 bis 3.3 die Profilsegmente 6 in die Ringe 1 und 4 ein. Durch die Federkraft der Blattfedern 7 werden die Profilsegmente 6 danach wieder in ihre Ausgangsstellung zurückgeführt.

Ist dabei der Abtriebsring 4 mit mehr Zähnen als der feststehende Ring 1 ausgestattet, werden nach einer Umdrehung des Rollenträgers 5 um den Ring 1 alle Zähne von den Rollen 3 in die Verzahnung der Ringe 1 und 4 eingedrückt, wobei dies gegen die Rückstellkraft der Federn 7 erfolgt. Es entsteht eine unvollständige Umdrehung des Abtriebsringes 4 und zwar mit der Differenz der Zähne gegenüber Ring 1. Bei drei Rollen 3 werden zum Beispiel in den Figuren 1, 2 und 3 im beweglichen Ring 4 drei Zähne mehr vorgesehen. Es entsteht eine Bewegung am Abtriebsring 4 und zwar dadurch, daß er Ring 4 nach jeder Umdrehung der Rollen 3 dem feststehenden Ring 1 vorauseilt.

Würde der Abtriebsring 4 mit einer gleichen Anzahl von vollkommen identischen Profilen oder Zähnen wie Ring 1 ausgebildet, ergäbe sich zwischen den beiden Ringen 1 und 4 beim Umlauf der Rollen 3 keine Relativbewegung. Der Abtriebsring 4 rastet gewissermaßen für den Bereich, in welchem Profilgleichheit mit dem festen Ring 1 besteht, ein. Ist die Zähnezahl geringer, ergibt sich eine Rückwärtsdrehung.

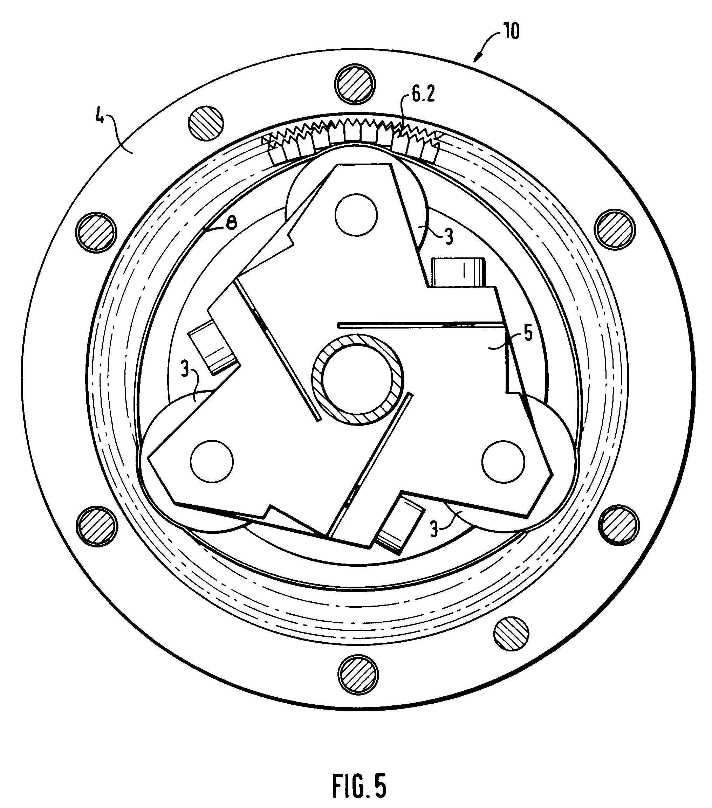

Da beim Umlauf der Andrückrollen 3 jeweils einzelne Segmente in radialer Richtung bewegt werden, während die Nachbarsegmente radial weiter innen angeordnet sind, ergibt sich zwischen diesen jeweils in verschiedenen radialen Positionen befindlichen Segmenten 6 eine kleine Abstufung. Diese ist kaum spürbar bei einem Ausführungsbeispiel mit in Umfangsrichtung schmalen Segmenten 6.1 gemäß Fig.l, die jeweils nur einen Zahn haben. Auch bei relativ schmalen Segmenten 6.2 gemäß Fig.3 ist diese Abstufung nur wenig merkbar, weil die Rolle 3 immer noch ähnlich wie bei Fig.l gleichzeitig mehrere Segmente 6 mehr oder weniger radial bewegt. Je breiter jedoch die Segmente 6 in Umfangsrichtung sind, um so eher ergeben sich einzelne Abstufungen etwa von der Größe der radialen Auslenkung der einzelnen Segmente 6.3. Um dadurch eventuell auftretende Geräusche oder Stöße zu mildern oder auszugleichen, ist beim Ausführungsbeispiel gemäß Fig.4 und 5 vorgesehen, daß zwischen dem Andrückelement, also den Rollen 3, und den den Ringen 4 abgewandten Seiten der Segmente 6 ein elastischer Kontaktring 8 angeordnet ist. Dadurch ergibt sich eine im wesentlichen stufenlose Berührfläche für die umlaufenden Rollen 3.

Es sei erwähnt, daß die Zahl der Zähne an jedem einzelnen Segment um so größer ist, je größer die Zähnezahl der Drehkörper oder Ringe 1 und 4 ist.

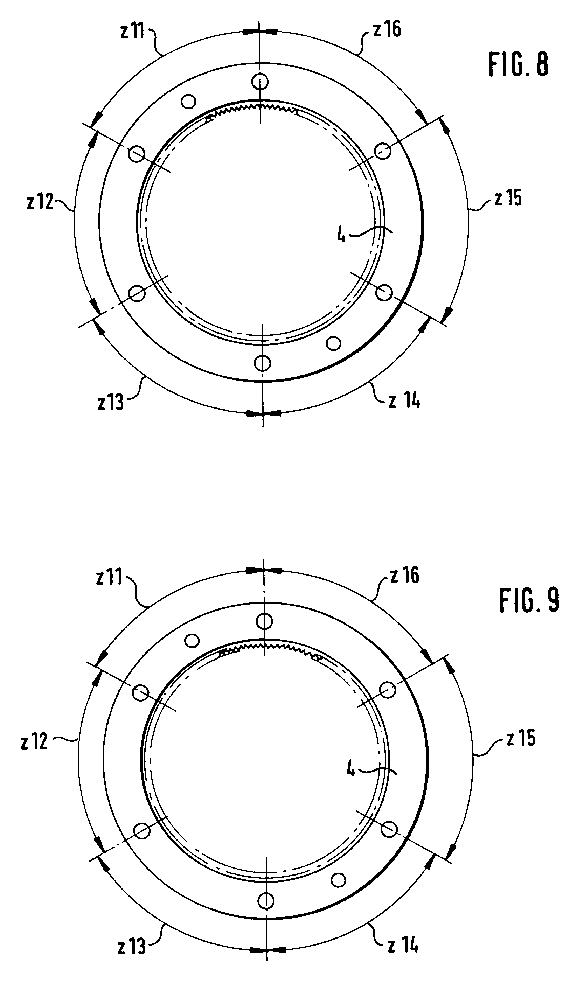

Eine ganz besondere Ausgestaltungsmöglichkeit des erfindungsgemäßen Getriebes 10 ist schematisiert in den Figuren 8 und 9 angedeutet. Diese Ausgestaltung sieht vor, daß über einen Teil des Umfanges des drehbaren Ringes 4 die Zähnezahl gleich der Zähnezahl über denselben Umfangsbereich des festen Drehkörpers oder Ringes 1 ist und daß die dazu jeweils benachbarten Umfangsbereiche des drehbaren Drehkörpers oder Ringes 4 abweichende Zähnezahlen haben. In Fig.8 ist ein drehbarer Ring 4 dargestellt, bei welchem drei Bereiche zll, z13 und z15 mit übereinstimmender oder identischer Profil- oder Zähnezahl die gleichen Winkelbereiche des feststehenden Ringes 1 ausgebildet oder versehen sind. In diesen Bereichen entsteht also an dem Abtriebsring 4 beim Umlauf der Rollen 3 eine Rastphase, das heißt, wenn die Rolle 3 diese Bereiche durchläuft, findet an der Abtriebswelle 12 keine Drehbewegung statt. Der Abtriebsring 4 ist gewissermaßen in einer Rastphase. Bei gleichbleibender Drehzahl der Antriebswelle 2 ergibt sich also eine schrittweise Drehung an der Abtriebswelle 12.

Eine Abwandlung ist anhand der Fig.9 dargestellt. Dabei sollen die Bereiche z11, z13 und z15 mit einem halben Zahn mehr und die Bereiche z12, z14 und z16 mit einem halben Zahn weniger als die gleichen Winkelbereiche des feststehenden Ringes 1 ausgebildt sein, so daß in Umfangsrichtung des bewegbaren Abtriebsringes 4 Bereiche kleinerer Zähnezahl sich mit Bereichen größerer Zähnezahlen gegenüber dem feststehenden Ring 1 abwechseln. Somit entsteht eine oszillierende Bewegung an der Abtriebswelle 12 oder einer sonstigen Abtriebsvorrichtung, weil der bewegbare Ring 4 abwechselnd in unterschiedliche Richtungen verdreht wird, wenn die Antriebswelle 2 und die davon angetriebenen Rollen 3 gleichmäßig umlaufen. Der bewegliche Drehkörper oder Ring 4 kann also in bestimmten Winkelbereichen seines Umfanges mehr und in anderen Winkelbereichen weniger Zähne als der gegenüberliegende Umfangsbereich des festen Drehkörpers oder Ringes 1 aufweisen, um dadurch eine bestimmte abgewandelte Bewegung am Abtrieb zu erreichen.

Dabei ist es zweckmäßig, wenn im Übergangsbereich von Umfangsbereichen übereinstimmender Zähnezahlen zu solchen unterschiedlicher Zähnezahlen oder im Übergangsbereich von Umfangsbereichen mit verschiedenen Zähnezahlen, also teilweise mehr Zähnen, teilweise weniger Zähnen als an dem feststehenden Ring 1, eine Übertragungsfunktion der Übergänge der Verzahnungen vorgesehen ist, die mindestens in der ersten Ableitung den Wert unterschiedlich von Null beziehungsweise Stoßfreiheit aufweist oder bewirkt. Die Übertragungsfunktion kann dabei dafür sorgen, daß der Geschwindigkeitskoeffizient von Null auf ein Maximum und wieder auf Null verändert wird. Dies geschieht, indem die Zähnezahldifferenz oder Profilabweichung nach einer Sinusfunktion zum Beispiel auf die gesamte Zähnezahl des Bereiches aufgeteilt wird. Dadurch entsteht in der Umgebung der Übergänge Profilgleichheit zwischen Antriebsring und Abtriebsring. Für eine am Antrieb 2 eingeleitete kontinuierliche Bewegung erhält man also am Abtrieb 4 durch Austausch des innen verzahnten Ringes 4 eine kontinuierliche Untersetzung, eine Start-Stop- oder eine oszillierende Bewegung.

Es wurde schon erwähnt, daß in den Ausführungsbeispielen als Andrückelement zum radialen Verstellen der einzelnen Segmente 6 umlaufende Rollen 3 vorgesehen sind. Für eine berührungslose Betätigung wäre jedoch auch möglich, als Andrückelement eine oder mehrere Düsen für ein Druckmedium, insbesondere für Druckluft, vorzusehen, die an den Segmenten 6 umläuft und mittels dem von ihr abgegebenen Mediumstrahl die Segmente 6 entgegen deren federnde Aufhängung in Eingriffstellung bringt. Hat die Düse das oder die einzudrückenden Segmente 6 bei ihrem Umlauf passiert, werden die Segmente 6 durch ihre Federn 7 wiederum zurückverstellt, also außer Eingriff gebracht.

Eine ebenfalls berührungslose und somit reibungsarme oder reibungsfreie Ausgestaltung ergibt sich, wenn eine elektromagnetische Andrückvorrichtung vorgesehen wird, bei welcher die Segmente 6 beispielsweise selbst Magnete sind, die von einem an ihrer dem Drehkörper oder Ring 1 und 4 abgewandten Seite umlaufenden Magneten als Andrückelement mit gegeneinander gleichpoliger Anordnung gegen ihre federnde Lagerung abstoßbar und somit aus ihrer normalen Lage auslenkbar und dadurch in Eingriff mit den Drehkörpern oder Ringen bringbar sind.

Für eine einfache Montage der relativ vielen Segmente 6 ist es günstig, wenn die jeweils parallelen Federn oder Blattfedern 7 insbesondere innerhalb ihres Einspannbereiches 7A miteinander verbunden, zum Beispiel einstückig sind, also eine Art Verbindungsring haben oder sind. Somit können die Federn 7 und die von diesen getragenen Segmente 6 unabhängig voneinander ausgelenkt werden, hängen aber innerhalb der Einspannstelle 7A aneinander, können also insgesamt als Ring montiert werden.

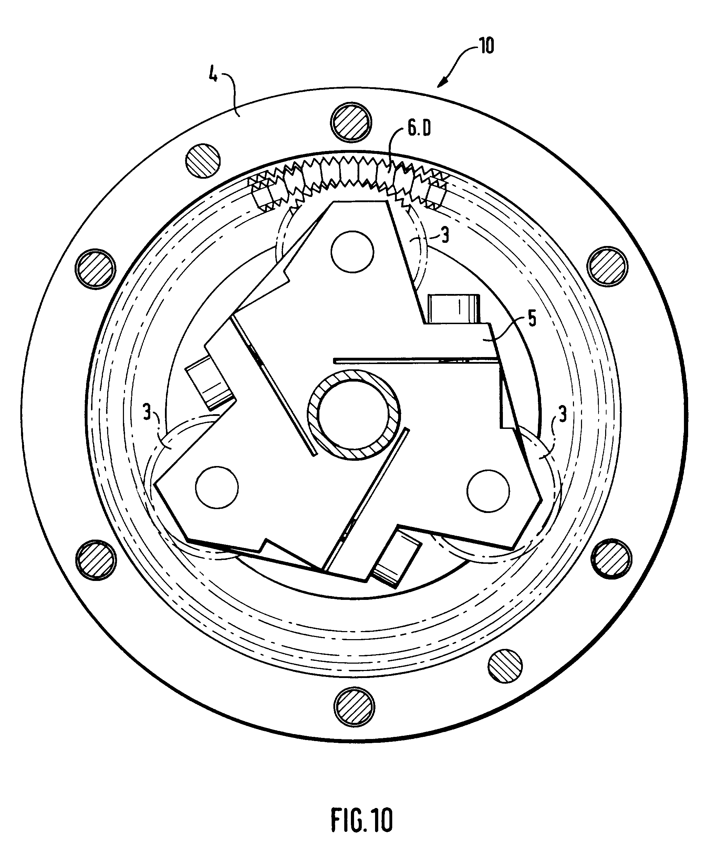

In Fig.10 und 11 ist ein Ausführungsbeispiel des Getriebes 10 dargestellt, bei welchem die Andrückrollen 3 ebenfalls eine Verzahnung haben, die mit einer dazu passenden Verzahnung an den Segmenten 6 während des Umlaufens und des Andrückens der Segmente 6 kämmt. Auch dadurch kann der Umlauf der Rollen 3 weich und weitgehend stoßfrei gestaltet werden, obwohl zwischen eingedrückten und nicht eingedrückten Segmenten 6 immer eine gewisse Stufung entsteht. Diese wird durch die Zahnung gemildert oder weitgehend ausgeglichen.

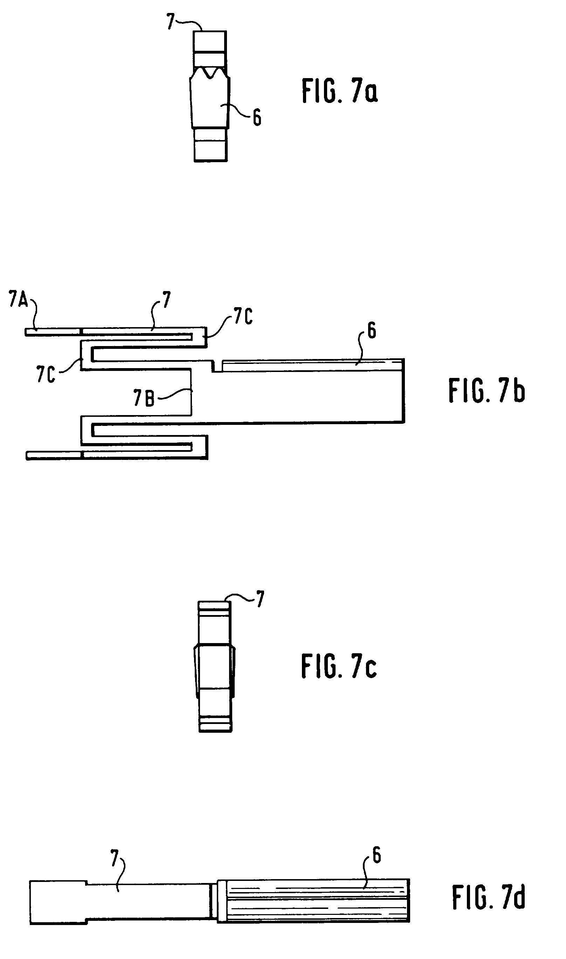

Eine besondere Ausgestaltung des Federsystemes mit den beiden Blattfedern 7 zeigt Fig.7. Dort erkennt man, daß die beiden stabförmigen Federn 7 jeweils über wenigstens zwei Richtungsänderungen 7C etwa S-förmig gestaltet sind und dabei wenigstens über einen Teil ihrer Länge parallel zu sich selbst verlaufen. Gemäß Fig.7b sind sie dabei mit ihren Richtungsänderungen spiegelsymmetrisch zueinander angeordnet, wobei die mit dem jeweiligen Segment 6 und miteinander verbundenen Enden dieser Federn 7 näher zueinander als die Einspannenden liegen. Dies führt dazu, daß trotz einer relativ geringen axialen Gesamtlänge der Federn 7 deren wirksame Feder länge gewissermaßen verdoppelt ist, also eine weichere Feder entsteht. Dies erlaubt eine axiale Verkürzung der Gesamtabmessung des Getriebes 10 oder eine Verringerung des Widerstandes beim Auslenken der Segmente 6 und damit vor allem unter beengten Platzverhältnissen eine Verbesserung des Wirkungsgrades.

In den Ausführungsbeispielen sind jeweils drei gleichmäßig am Umfang verteilte Rollen 3 als Andrückelemente vorgesehen. Es wäre jedoch auch möglich, mit nur einem derartigen Andrückelement oder mit wenigstens zwei einander auf einem Durchmesser gegenüberliegenden derartigen Andrückelementen ein solches Getriebe 10 zu gestalten. In all diesen Fällen können diese Andrückelement an gemeinsam mit der Antriebswelle 2 drehbaren Stegen bzw. Trägern 5 befestigt oder gelagert sein.

Wenn dabei diese Andrückelemente oder Rollen 3 die anhand der Figur 10 erwähnte Außenverzahnung haben, wird gleichzeitig die Genauigkeit der Verstellung der einzelnen Segmente 6 und damit ihre Einführung in die Verzahnungen der Ringe 1 und 4 verbessert. Die durch die Breite der Blattfedern 7 bewirkte Torsionsfreiheit des ganzen Systemes wird dabei durch eine solche Verzahnung unterstützt.
Das Umlaufrollengetriebe 10 mit zwei an einem Innen- oder ggf. Außenumfang eine Profilierung oder Verzahnung aufweisenden Rundkörpern, insbesondere Ringen 1 und 4, hat eine Antriebswelle 2, mit welcher Andrückelemente, vor allem umlaufende Rollen 3, jeweils einzelne, unabhängig voneinander radial verstellbare Segmente 6 mit Gegenprofilierungen in Eingriff mit den erstgenannten Profilierungen an den Rundkörpern bringt. Da diese Rundkörper oder Ringe 1 und 4 jeweils voneinander abweichende Zähnezahlen haben und ein Ring 1 feststeht, während der andere Ring 4 drehbar ist, ergibt sich eine relative Verstellung und damit gleichzeitig eine hohe Untersetzung zwischen Antrieb und Abtrieb.
Für eine gut geführte und dennoch unabhängige Bewegung der Segmente 6 ohne axial angeordnete Führungsringe oder ohne gegenseitige Verbindung der einzelnen Segmente 6 zu einer Segment-Kette ist vorgesehen, daß die in Umfangsrichtung unmittelbar nebeneinander angeordneten Segmente 6 einzeln und unabhängig voneinander jeweils an zwei parallelen, starr miteinander verbundenen Stab- oder insbesondere Blattfedern 7 gegen deren Rückstellkraft auslenkbar gelagert sind, wobei die Federn 7 in radialer Richtung hintereinander angeordnet sind, ihre größere Breite sich jedoch in Umfangsrichtung erstreckt. Dadurch können die Segmente 6 jeweils parallel zu sich selbst ausgelenkt werden, also eine präzise Eingriffbewegung und damit eine Verstellbewegung an dem drehbaren Rundkörper oder Ring 4 mit hohem Wirkungsgrad durchführen.

## Patentansprüche

1. Umlaufrollengetriebe (10) mit zwei an einem Innen- oder Außenumfang eine Profilierung oder Verzahnung aufweisenden Rundkörpern, insbesondere Ringen (1,4), wobei ein erster Rundkörper feststeht und ein zweiter Rundkörper parallel und koaxial zu dem ersten Rundkörper angeordnet und relativ zu diesem drehbar gelagert ist und die Zähnezahl an der Profilierung der beiden Rundkörper verschieden ist, mit nacheinander an der Profilierung oder Verzahnung der Rundkörper andrückbaren Segmenten (6.1, 6.2, 6.3, 6.D), die eine zu dieser Profilierung oder Verzahnung der Rundkörper passende Gegenverzahnung aufweisen und damit jeweils gleichzeitig die Verzahnung des feststehenden und des drehbaren Rundkörpers beaufschlagen, und mit wenigstens einem an den Segmenten (6) auf deren den Rundkörpern abgewandter Seite umlaufenden, diese jeweils in radialer Richtung parallel zu sich selbst zu den Rundkörpern hin verstellbaren Andrückelement, wobei aufgrund der unterschiedlichen Zähnezahlen an den beiden Rundkörpern der drehbare Rundkörper relativ zu dem feststehenden Rundkörper bewegbar ist und wobei eine Rückstellkraft die Segmente jeweils wieder aus der Verzahnung löst, **dadurch gekennzeichnet**, daß die in Umfangsrichtung nebeneinander angeordneten Segmente (6.1, 6.2, 6.3, 6.D) einzeln und unabhängig voneinander jeweils an zwei parallelen, starr miteinander verbundenen Stab- oder Blattfedern (7) gegen deren Rückstellkraft auslenkbar gelagert sind, wobei die beiden Federn (7) in radialer Richtung hintereinander angeordnet und beim Andrücken des jeweiligen Segmentes (6) derart auslenkbar sind, daß das jeweilige Segment (6) parallel zu sich selbst verstellbar ist.

2. Umlaufrollengetriebe mit zwei unterschiedlich innenverzahnten Ringen (1,4) als Rundkörper, von denen einer drehbar gelagert ist, mit einer Welle und mit einem mit Andruckelementen oder Rollelementen bestückten und mit der Welle starr verbundenen Träger (5) nach Anspruch 1, dadurch gekennzeichnet, daß die innenprofilierten Ringe (1,4) mindestens eine Berührungsstelle mit dem außenverzahnten Profilsegment (6) aufweisen, welches mit zum Beispiel einem, zwei, drei oder mehr Zähnen versehen ist, und daß die Segmente (6) mittels dem parallelen Federsystem an einem Befestigungsring gelagert sind.

3. Umlaufrollengetriebe nach Anspruch 1 oder 2, dadurch gekennzeichnet, daß die in radialer Richtung nebeneinander angeordneten beiden Federn (7) zur Halterung eines Segmentes (6) jeweils mit Abstand zu ihren Einspannstellen (7A) durch einen starren Querstab (7B) oder den Segmentkörper (6) selbst verbunden sind, wobei sich der Querstab (7B) oder die Verbindung insbesondere in radialer Richtung erstrecken, und daß in axialer Richtung neben dem Querstab (7B) oder der Verbindung der beiden Federn (7) das die Verzahnung aufweisende Segment (6) angeordnet oder befestigt ist.

4. Umlaufrollengetriebe nach einem der Ansprüche 1 bis 3, dadurch gekennzeichnet, daß das Segment (6) etwa in der Mitte zwischen den beiden Federn (7) oder in Fortsetzung einer dieser etwa parallel zur Mittelachse sich erstreckenden Federn (7), insbesondere der in radialer Richtung am weitesten außen liegenden Feder (7) angeordnet ist.

5. Umlaufrollengetriebe nach einem der Ansprüche 1 bis 4, dadurch gekennzeichnet, daß die Zähne der Drehkörper oder Ringe (1,4) und die Zähne der Segmente (6) etwa parallel zur Mittelachse der Antriebswelle (2) und der Abtriebswelle (12) angeordnet sind.

6. Umlaufrollengetriebe nach einem der Ansprüche 1 bis 5, dadurch gekennzeichnet, daß zwischen dem Andrückelement, insbesondere einer während des Andrückens und Umlaufens sich abrollenden Rolle (3), und den den Drehkörpern oder Ringen (1,4) abgewandten Seiten der Segmente (6) ein elastischer Kontaktring (8) angeordnet ist.

7. Umlaufrollengetriebe nach einem der Ansprüche 1 bis 6, dadurch gekennzeichnet, daß die Zahl der Zähne an jedem einzelnen Segment umso größer ist, je größer die Zähnezahl der Drehkörper oder Ringe (1,4) ist.

8. Umlaufrollengetriebe nach einem der vorstehenden Ansprüche, dadurch gekennzeichnet, daß über einen Teil des Umfanges des drehbaren Drehkörpers oder Ringes (4) die Zähnezahl gleich der Zähnezahl über den entsprechenden Umfangsbereich des festen Drehkörpers oder Ringes (1) ist und daß die dazu jeweils benachbarten Umfangsbereiche des drehbaren Drehkörpers oder Ringes (4) abweichende Zähnezahlen oder Zahnteilungen haben.

9. Umlaufrollengetriebe nach einem der Ansprüche 1 bis 8, dadurch gekennzeichnet, daß der bewegliche Drehkörper oder Ring (4) in bestimmten Winkelbereichen seines Umfanges mehr und in anderen Winkelbereichen weniger Zähne als der gegenüberliegende Umfangsbereich des festen Drehkörpers oder Ringes (1) aufweist.

10. Umlaufrollengetriebe nach einem der Ansprüche 1 bis 9, dadurch gekennzeichnet, daß im Übergangsbereich von Umfangsbereichen übereinstimmender Zähnezahlen zu solchen unterschiedlicher Zähnezahlen oder im Übergangsbereich von Umfangsbereichen mit verschiedenen Zähnezahlen eine Übertragungsfunktion der Übergänge der Verzahnungen vorgesehen ist, die mindestens in der ersten Ableitung den Wert unterschiedlich von Null beziehungsweise Stoßfreiheit aufweist.

11. Umlaufrollengetriebe nach einem der Ansprüche 1 bis 10, dadurch gekennzeichnet, daß als Andrückelement wenigstens eine umlaufende Rolle oder wenigstens eine Düse für ein Druckmedium, insbesondere eine Druckluft abgebende Düse, vorgesehen ist, die an den Segmenten umläuft und diese nacheinander aufgrund des von ihr ausgehenden Strahles entgegen deren federnder Aufhängung in Eingriffstellung bringt.

12. Umlaufrollengetriebe nach einem der Ansprüche 1 bis 11, dadurch gekennzeichnet, daß eine magnetische oder elektromagnetische Andrückvorrichtung vorgesehen ist, bei welcher die Segmente (6) Magnete sind, die von einem an ihrer dem Drehkörper abgewandten Seite umlaufenden Magneten als Andrückelement mit gegeneinander gleichpoliger Anordnung gegen ihre federnde Lagerung abstoßbar und auslenkbar sind.

13. Umlaufrollengetriebe nach einem der Ansprüche 1 bis 12, dadurch gekennzeichnet, daß die jeweils parallelen Federn oder Blattfedern (7) innerhalb ihres Einspannbereiches (7A) miteinander insbesondere einstückig durch einen Ring verbunden sind.

14. Umlaufrollengetriebe nach einem der Ansprüche 1 bis 11, dadurch gekennzeichnet, daß die Andrückrollen (3) eine Verzahnung haben, die mit einer dazu passenden Verzahnung an den Segmenten (6) während des Umlaufes und des Andrückens der Segmente (6) kämmt.

15. Umlaufrollengetriebe nach einem der Ansprüche 1 bis 14, dadurch gekennzeichnet, daß die beiden stabförmigen Federn (7) jeweils über wenigstens zwei Richtungsänderungen (7C) etwa S oder Z-förmig gestaltet sind, wobei sie insbesondere mit ihren Richtungsänderungen spiegelsymmetrisch zueinander angeordnet sind und die mit dem Segment (6) miteinander verbundenen Enden näher zueinander als die Einspannenden liegen.

16. Umlaufrollengetriebe nach einem der Ansprüche 1 bis 15, dadurch gekennzeichnet, daß wenigstens zwei einander auf einem Durchmesser gegenüberliegende oder drei gleichmäßig am Umfang verteilte Andrückelemente oder Rollen (3) vorgesehen sind, die an insbesondere gemeinsamen, mit der Antriebswelle (2) drehbaren Stegen oder Trägern (5) befestigt oder gelagert, insbesondere drehbar gelagert sind.

17. Umlaufrollengetriebe nach einem der vorstehenden Ansprüche, dadurch gekennzeichnet, daß die Drehkörper oder Ringe (1,4) oder Scheiben eine Außenverzahnung haben, daß die einzelnen Segmente von außen dagegen andrückbar sind und eine Innenverzahnung haben und daß an der Außenseite der Segmente das Andrückelement oder die Andrückrolle umläuft.

## Claims

1. An epicyclic roller gear (10) having two round bodies, in particular rings (1, 4), provided with a profile or tooth system on an inner or outer circumference, wherein a first round body is fixed, and arranged parallel and coaxially to said first round body is a second round body rotatably mounted relative to said first round body, and the number of teeth on the profile of the two round bodies is different, further having segments (6.1, 6.2, 6.3, 6.D) adapted to be successively pressed on the profile or tooth system of the round bodies, said segments having a complementary tooth system matching said profile or tooth system of the round bodies and being applied therewith to the tooth system of the fixed round body and that of the rotatable round body simultaneously, and further having at least one pressing element that revolves on the segments (6) on their side facing away from the round bodies and radially displaces said segments parallel to their own direction and towards the round bodies, whereby, as a result of the different numbers of teeth on the two round bodies, the rotatable round body is movable relative to the fixed round body, and whereby a restoring force disengages the segments from the tooth system, **characterized in that** the segments (6.1, 6.2, 6.3, 6.D) arranged side by side in the circumferential direction are mounted individually and independently of one another on in each case two parallel, rigidly interconnected bar springs or leaf springs (7) so as to be deflectable against the restoring force of said springs, wherein the two springs (7) are arranged one behind the other in the radial direction and when the respective segment (6) is pressed are deflectable in such a way that the respective segment (6) is displaceable parallel to its own direction.

2. An epicyclic roller gear having round bodies in the form of two rings (1,4) with different internal tooth systems, one of which rings is rotatably mounted, and further having a shaft and, rigidly connected thereto, a carrier (5) provided with pressing elements or rolling elements as claimed in claim 1, characterized in that the internally profiled rings (1, 4) have at least one point of contact with the externally toothed profile segment (6) provided with, for example, one, two, three or more teeth, and that the segments (6) are mounted on a fastening ring by means of the parallel spring system.

3. An epicyclic roller gear as claimed in claim 1 or claim 2, characterized in that the two radially adjacent springs (7) for mounting a segment (6) are connected by a rigid cross bar (7B) or by the segment body (6) itself, such connection being established in spaced relationship to the fixing points (7A) of said springs, the cross bar (7B) or connection extending particularly in the radial direction, and that the toothed segment (6) is arranged or fastened in the axial direction beside the cross bar (7B) or connection of the two springs (7).

4. An epicyclic roller gear as claimed in any one of claims 1 to 3, characterized in that the segment (6) is arranged about midway between the two springs (7) or in extension of one of said springs (7) extending substantially parallel to the central axis, particularly in extension of the radially outermost spring (7).

5. An epicyclic roller gear as claimed in any one of claims 1 to 4, characterized in that the teeth of the rotary bodies or rings (1, 4) and the teeth of the segments (6) are arranged approximately parallel to the central axis of the input shaft (2) and output shaft (12).

6. An epicyclic roller gear as claimed in any one of claims 1 to 5, characterized in that a flexible contact ring (8) is arranged between the pressing element, particularly a roller (3) rolling as it presses and revolves, and the sides of the segments (6) facing away from the rotary bodies or rings (1, 4).

7. An epicyclic roller gear as claimed in any one of claims 1 to 6, characterized in that the greater the number of teeth on the rotary bodies or rings is, the greater the number of teeth on each individual segment can be.

8. An epicyclic roller gear as claimed in any one of the preceding claims, characterized in that over a portion of the circumference of the rotatable rotary body or ring (4), the number of teeth is the same as that over the corresponding circumferential region of the fixed rotary body or ring (1) and that the adjacent circumferential regions of the rotatable rotary body or ring (4) have different numbers of teeth or tooth pitches.

9. An epicyclic roller gear as claimed in any one of claims 1 to 8, characterized in that the movable rotary body or ring (4) has more teeth in certain angular regions of its circumference and less teeth in other angular regions than the opposing circumferential region of the fixed rotary body or ring (1).

10. An epicyclic roller gear as claimed in any one of claims 1 to 9, characterized in that in the transition region from circumferential regions having conforming numbers of teeth to such having different numbers of teeth, or in the transition region from circumferential regions having varying numbers of teeth, a transfer function of the transitions of the tooth systems is provided that at least in the first derivation has a value that is not zero, or freedom from jolting.

11. An epicyclic roller gear as claimed in any one of claims 1 to 10, characterized in that the pressing element is provided in the form of least one epicyclic roller or at least one nozzle for a pressure medium, in particular a nozzle emitting compressed air, that revolves on the segments and, due to the jet it emits, successively brings the segments into engagement against their spring mounting.

12. An epicyclic roller gear as claimed in any one of claims 1 to 11, characterized in that a magnetic or electromagnetic pressing device is provided, wherein the segments (6) are magnets repellable and deflectable against their spring mount by a pressing element in the form of a magnet which has an arrangement of mutually like poles and revolves on the segments on their side facing away from the rotary body.

13. An epicyclic roller gear as claimed in any one of claims 1 to 12, characterized in that the parallel springs or leaf springs (7) are interconnected within their region of fixation (7A), in particular they are integrally interconnected by means of a ring.

14. An epicyclic roller gear as claimed in any one of claims 1 to 11, characterized in that the pressing rollers (3) have a tooth system meshing with a complementary tooth system on the segments (6) as said rollers revolve and press the segments (6).

15. An epicyclic roller gear as claimed in any one of claims 1 to 14, characterized in that each of the two bar-like springs (7) is given an approximately S-shaped or Z-shaped configuration by means of at least two changes of direction (7C), in particular said springs are arranged with their changes of direction in mirror symmetrical relationship and the interconnected ends connected to the segment (6) are closer to each other than the fixed ends.

16. An epicyclic roller gear as claimed in any one of claims 1 to 15, characterized in that at least two diametrally opposed or three equi-circumferential pressing elements or rollers (3) are provided which are supported or mounted, particularly rotatably mounted, particularly on common arms or carriers (5) rotatable with the drive shaft (2).

17. An epicyclic roller gear as claimed in any one of the preceding claims, characterized in that the rotary bodies or rings (1, 4) or discs have an external tooth system, that the individual segments are adapted to be pressed thereagainst from the outside and have an internal tooth system, and that the pressing element or pressing roller revolves on the outside of the segments.

## Revendications

1. Engrenage planétaire (10) à galets, avec deux éléments circulaires, notamment des bagues (1, 4), présentant un profilage ou une denture sur leur circonférence intérieure ou extérieure, un premier élément circulaire étant fixe et un deuxième élément circulaire étant disposé parallèlement et coaxialement au premier élément circulaire et étant monté à rotation par rapport à ce dernier, et le nombre de dents sur le profilage des deux éléments circulaires étant différent, avec des segments (6.1, 6.2, 6.3, 6.D) pouvant être successivement appliqués par pression sur le profilage ou denture des éléments circulaires, segments qui présentent une denture complémentaire adaptée à ce profilage ou denture des éléments circulaires et qui sollicitent ainsi respectivement simultanément la denture de l'élément circulaire fixe et celle de l'élément circulaire rotatif, et avec au moins un élément de pression circulant sur les segments (6) sur leur côté opposé aux éléments circulaires et pouvant respectivement déplacer ces segments en direction radiale, parallèlement à eux-mêmes, vers les éléments circulaires, l'élément circulaire rotatif pouvant être déplacé par rapport à l'élément circulaire fixe du fait du nombre différent de dents sur les deux éléments circulaires, et une force de rappel dégageant respectivement à nouveau les segments de la denture, **caractérisé** en ce que les segments (6.1, 6.2, 6.3, 6.D), disposés les uns à côté des autres en direction circonférentielle, sont montés en pouvant être, de façon individuelle et indépendante, respectivement déviés sur deux ressorts à lame ou en forme de barre (7) parallèles et rigidement reliés l'un à l'autre, contre leur force de rappel, les deux ressorts (7) étant disposés l'un derrière l'autre en direction radiale et pouvant, lors de l'application par pression du segment respectif (6), être déviés de,telle sorte que le segment respectif (6) peut être déplacé parallèlement à lui-même.

2. Engrenage planétaire à galets avec deux bagues (1, 4) à denture intérieure différente comme éléments circulaires, dont l'une est montée à rotation, avec un arbre et avec un support (5) équipé d'éléments de pression ou d'éléments roulants et rigidement relié à l'arbre, selon la revendication 1, **caractérisé** en ce que les bagues (1, 4) à profilage intérieur présentent au moins un point de contact avec le segment profilé (6) à denture extérieure, segment qui est par exemple pourvu d'une, deux, trois ou plus de trois dents, et en ce que les segments (6) sont montés sur une bague de fixation par l'intermédiaire du système de ressorts parallèles.

3. Engrenage planétaire à galets selon la revendication 1 ou 2, **caractérisé** en ce que les deux ressorts (7), disposés l'un derrière l'autre en direction radiale et destinés à maintenir un segment (6), sont respectivement reliés à distance de leurs points de serrage (7A) par une barre transversale rigide (7B) ou par le corps du segment (6) lui-même, la barre transversale (7B) ou la liaison s'étendant notamment en direction radiale, et en ce que le segment (6) présentant la denture est disposé ou fixé à côté, en direction axiale, de la barre transversale (7B) ou de la liaison des deux ressorts (7).

4. Engrenage planétaire à galets selon une des revendications 1 à 3, **caractérisé** en ce que le segment (6) est disposé environ au milieu entre les deux ressorts (7) ou dans le prolongement d'un de ces ressorts (7) s'étendant environ parallèlement à l'axe médian, notamment du ressort (7) situé le plus à l'extérieur en direction radiale.

5. Engrenage planétaire à galets selon une des revendications 1 à 4, **caractérisé** en ce que les dents des éléments circulaires ou bagues (1, 4) et les dents des segments (6) sont disposées environ parallèlement à l'axe médian de l'arbre d'entraînement (2) et de l'arbre de sortie (12).

6. Engrenage planétaire à galets selon une des revendications 1 à 5, **caractérisé** en ce qu'une bague de contact élastique (8) est disposée entre l'élément de pression, notamment un galet (3) roulant sur lui-même pendant la pression en application et la circulation, et les côtés des segments (6) qui sont opposés aux éléments circulaires ou bagues (1, 4).

7. Engrenage planétaire à galets selon une des revendications 1 à 6, **caractérisé** en ce que le nombre de dents sur chaque segment individuel est d'autant plus grand qu'est grand le nombre de dents des éléments circulaires ou bagues (1, 4).

8. Engrenage planétaire à galets selon une des revendications précédentes, **caractérisé** en ce que, sur une partie de la circonférence de la bague (4) ou élément circulaire rotatif, le nombre de dents est égal au nombre de dents sur la région circonférentielle correspondante de la bague (1) ou élément circulaire fixe, et en ce que les régions circonférentielles de la bague (4) ou élément circulaire rotatif qui sont respectivement voisines de ladite région possèdent des nombres de dents ou des pas de dents différents.

9. Engrenage planétaire à galets selon une des revendications 1 à 8, **caractérisé** en ce que la bague (4) ou élément circulaire mobile présente plus, dans des régions angulaires déterminées de sa circonférence, et moins, dans d'autres régions angulaires, de dents que la région circonférentielle opposée de la bague (1) ou élément circulaire fixe.

10. Engrenage planétaire à galets selon une des revendications 1 à 9, **caractérisé** en ce qu'est prévue, dans la région de transition entre des régions circonférentielles à nombres de dents identiques et des régions circonférentielles à nombres de dents différents, ou dans la région de transition entre des régions circonférentielles à nombres de dents différents, une fonction de transmission des transitions des dentures qui présente, au moins dans la dérivée première, une valeur différente de zéro ou encore une absence d'à-coups.

11. Engrenage planétaire à galets selon une des revendications 1 à 10, **caractérisé** en ce qu'est prévu comme élément de pression au moins un galet circulant ou au moins une buse pour un fluide de pression, notamment une buse délivrant de l'air comprimé, qui circule sur les segments et les amène successivement en position d'engagement, à l'encontre de leur suspension à ressorts, grâce au jet qu'elle délivre.

12. Engrenage planétaire à galets selon une des revendications 1 à 11, **caractérisé** en ce qu'est prévu un dispositif de pression magnétique ou électromagnétique, selon lequel les segments (6) sont des aimants qui peuvent être repoussés et déviés, à l'encontre de leur suspension à ressorts, par un aimant circulant sur leur côté opposé à l'élément circulaire, aimant qui sert d'élément de pression et présente une disposition identique des pôles.

13. Engrenage planétaire à galets selon une des revendications 1 à 12, **caractérisé** en ce que les ressorts ou ressorts à lame (7) respectivement parallèles sont, à l'intérieur de leur région de serrage (7A), mutuellement reliés, notamment d'un seul tenant, par une bague.

14. Engrenage planétaire à galets selon une des revendications 1 à 11, **caractérisé** en ce que les galets de pression (3) possèdent une denture qui engrène avec une denture correspondante sur les segments (6) pendant la circulation et la pression en application des segments (6).

15. Engrenage planétaire à galets selon une des revendications 1 à 14, **caractérisé** en ce que les deux ressorts (7) en forme de barre sont chacun réalisés environ en forme de S ou de Z au moyen d'au moins deux modifications de direction (7C), les deux ressorts étant notamment disposés avec leurs modifications de direction respectives mutuellement symétriques, et leurs extrémités mutuellement reliés par le segment (6) étant plus proches l'une de l'autre que leurs extrémités de serrage.

16. Engrenage planétaire à galets selon une des revendications 1 à 15, **caractérisé** en ce que sont prévus au moins deux éléments de pression ou galets (3) mutuellement opposés sur un diamètre ou trois éléments de pression ou galets (3) uniformément répartis sur la circonférence, éléments qui sont fixés ou montés, notamment montés à rotation, sur des nervures ou supports (5) notamment communs, rotatifs avec l'arbre d'entraînement (2).

17. Engrenage planétaire à galets selon une des revendications précédentes, **caractérisé** en ce que les éléments circulaires ou bagues (1, 4) ou disques possèdent une denture extérieure, en ce que les différents segments peuvent être pressés en application de l'extérieur contre cette dernière et possèdent une denture intérieure, et en ce que l'élément de pression ou le galet de pression circule sur le côté extérieur des segments.
